# EUROPEAN PATENT SPECIFICATION

(11) **EP 4 502 742 B1**
(45) Date of publication and mention of the grant of the patent: **18.03.2026**
(21) Application number: 23932839.6
(22) Date of filing: 13.12.2023
(51) Int. Cl.: G21C 1/09, G05B 19/042, G21C 1/08, G21C 1/18

(54) **DEVICE AND METHOD FOR CONTROLLING PRESSURIZER SPRAY VALVE**
VORRICHTUNG UND VERFAHREN ZUR STEUERUNG EINES DRUCKSTABILISATORSPRÜHVENTILS
APPAREIL ET PROCÉDÉ DE COMMANDE DE SOUPAPE DE PULVÉRISATION DE STABILISATEUR DE PRESSION

(30) Priority: 05.09.2023 CN 202311144152
(43) Date of publication of application: 05.02.2025
(73) Proprietor: China Nuclear Power Engineering Co., Ltd., Shenzhen, Guangdong 518124 (CN)
(72) Inventor: WU, Bin, Shenzhen, Guangdong 518124 (CN); LU, Zhenguo, Shenzhen, Guangdong 518124 (CN); LV, Bo, Shenzhen, Guangdong 518124 (CN); AN, Jing, Shenzhen, Guangdong 518124 (CN); LI, Xiaotao, Shenzhen, Guangdong 518124 (CN); ZHAO, Xianguo, Shenzhen, Guangdong 518124 (CN)
(74) Representative: Westphal, Mussgnug & Partner, Patentanwälte mbB
(86) International application number: PCT/CN2023/138589
(87) International publication number: WO 2024/212568

(56) References cited:
- CN-A- 101 783 194
- CN-A- 107 763 282
- CN-A- 108 533 414
- CN-A- 117 170 285
- CN-B- 107 763 282
- CN-U- 202 377 081
- CN-U- 211 852 960
- CN-U- 214 534 728
- JP-A- 2012 154 900
- JP-A- H01 263 597
- JP-A- H03 270 652
- WANG PENGFEI ET AL: "A fuzzy fault accommodation method for nuclear power plants under actuator stuck faults", ANNALS OF NUCLEAR ENERGY, PERGAMON PRESS, OXFORD, GB, vol. 165, 8 September 2021 (2021-09-08), XP086875065, ISSN: 0306-4549, [retrieved on 20210908], DOI: 10.1016/J.ANUCENE.2021.108674

## Description

### TECHNICAL FIELD

The invention relates to the control field of electromagnetically driven valves, in particular to a device and a method for controlling a pressurizer spray valve.

### BACKGROUND

In PWR nuclear power plant, the pressurizer spray valve is located in the main spray piping of the pressurizer system, and its main function is to participate in the pressure control of the primary-loop. Under DBC-1 conditions (including startup and shutdown conditions of the power plant), the pressurizer controls the pressure of the primary-loop within the allowable variation range through the spray valve and the electric heater, so as to avoid emergency shutdown of the reactor and action of the pressurizer safety valve; In a DBC-2 type condition (such as a secondary side heat removal reduction accident), the operator manually opens and closes the pressurizer spray valve to depressurize the primary circuit, so as to achieve the safe shutdown state of the residual heat removal mode of the safety injection system.

Unlike the second-generation nuclear power, in order to reduce the air supply in the containment, the mainstream technology route of the third-generation nuclear power has introduced a new design concept, and the pressurizer spray valve has been changed from the pneumatic control valve of the second-generation unit to the electromagnetic-driven control valve.

A valve positioner is used to control the pneumatic pressurizer spray valve in traditional nuclear power plant, which is a mature control method, but there are some problems, such as the need to introduce compressed air into the containment, complex piping, large space occupied by the valve and so on. The pressurizer spray valve of the third generation nuclear power unit is changed into an electromagnetically driven control valve, however, the electromagnetically driven control valve is different from the conventional electromagnetically driven valve which only carries out opening-closing control, and not only needs to carry out opening-closing open-loop control, but also needs to carry out regulating closed-loop control. If the electromagnetically driven control valve cannot ensure the stable control of the pressurizer pressure of the nuclear power plant under various working conditions, the safe and stable operation of the nuclear power plant cannot be guaranteed.

Publications CN 107 763 282 B, JP 2012 154900 A, JP H01 263597 A and WANG PENGFEI ET AL.: ""A fuzzy fault accommodation method for nuclear power plants under actuator stuck faults", ANNALS OF NUCLEAR ENERGY, PERGAMON PRESS, OXFORD, GB, vol. 165, 8 September 2021 (2021-09-08), XP086875065, ISSN: 0306-4549, DOI: 10.1016/J.ANUCENE.2021.108674 [retrieved on 2021-09-08], are considered to be relevant to the present application.

### BRIEF SUMMARY OF THE INVENTION

The technical problem to be solved by the present invention is to provide a device and a method for controlling a pressurizer spray valve. The invention is set out in the appended set of claims.

The technical scheme adopted by the invention for solving the technical problem is as follows: a device for controlling a pressurizer spray valve is constructed, and comprises a valve regulating control loop and a valve opening-closing control loop;

The valve regulating control loop comprises a main control module and a signal conditioning module, and the valve opening-closing control loop comprises a priority control module and an opening-closing control module; the valve opening-closing control loop further comprises a switching power supply; the switching power supply is configured to provide electric energy for the valve opening-closing control loop;

The opening-closing control module and the priority control module are respectively configured to execute opening-closing control and priority control; the opening-closing control module comprises an opening instruction control unit and a closing instruction control unit; the opening instruction control unit is use for executing full-open control, the closing instruction control unit is configured to execute full-close control, and the valve regulating control loop does not work when the opening instruction control unit execute full-open control or the closing instruction control unit execute full-close control; the opening instruction control unit comprises a second relay, and the closing instruction control unit comprises a first relay; the first relay adopts a normally-closed contact, and the priority control module controls the valve regulating control loop not to work when the first relay receives a closing instruction signal and/or the second relay receives an opening instruction signal; the priority control module comprises a first normally-closed contact and a second normally-closed contact of a first relay, a normally-open contact of a second relay, a first contactor and a second contactor; the first normally-closed contact of the first relay, the normally-open contact of the second relay and the coil of the first contactor are sequentially connected in series and then connected with the positive end and the negative end of the switching power supply; the first normally-closed contact of the first contactor, the second normally-closed contact of the first contactor, the second normally-closed contacts of the first relay and the coil of the second contactor are sequentially connected in series and then connected with the positive end and the negative end of the switching power supply; the first normally-open contact of the first contactor is connected in parallel with the normally-open contact of the second relay;

The signal conditioning module is configured to convert the position detection signal of a valve and then transmits the position detection signal to the main control module;

And the main control module is configured to perform closed-loop regulating control according to the position detection signal and a closed-loop regulating instruction signal.

In the device for controlling a pressurizer spray valve, the valve regulating control loop also comprises a driving control module;

And the driving control module is configured to execute drive control on the electromagnetically driven valve according to the closed-loop regulating control instruction output by the main control module.

In the device for controlling a pressurizer spray valve, the valve regulating control loop further comprises a current detection module;

The current detection module is configured to detect the current of the electromagnetically driven valve and outputting a current detection signal to the main control module, and the main control module executes compensation control according to the current detection signal.

In the device for controlling a pressurizer spray valve, the valve regulating control loop also comprises a first anti-reverse module;

The first anti-reverse module is configured to prevent reverse current.

In the device for controlling a pressurizer spray valve, the valve regulating control loop further comprises a first power supply control module;

The first power supply control module is configured to execute the power supply control of the valve regulating control loop.

In the device for controlling a pressurizer spray valve, the valve opening-closing control loop further comprises a second power supply control module;

The second power supply control module is configured to execute the power supply control of the valve opening-closing control loop.

In the device for controlling a pressurizer spray valve, a second normally-open contact of a first contactor and a third normally-open contact of the first contactor are arranged on a first power supply circuit of an electromagnetically driven valve, and a first normally-open contact of the second contactor and a second normally-open contacts of the second contactor are arranged on a second power supply circuit of the electromagnetically driven valve.

In the device for controlling a pressurizer spray valve, the valve opening-closing control loop also comprises a second anti-reverse module and a third anti-reverse module;

The second anti-reverse module is configured to prevent the reverse current of the power supply circuit of the electromagnetically driven valve;

The third anti-reverse module is arranged between the positive end and the negative end of the electromagnetically driven valve and is configured to prevent the instantaneous reverse current generated by the electromagnetically driven valve from reversing when it loses power.

The invention also provides a method for controlling a pressurizer spray valve, which is applied to the device for controlling a pressurizer spray valve and comprises the following steps:

Receiving an external instruction signal;

Judging the type of the external instruction signal;

If the external instruction signal is an opening-closing instruction signal, executing opening-closing control;

And if the external instruction signal is a closed-loop regulating instruction signal, execute closed-loop regulating control on the electromagnetically driven valve.

In the method for controlling a pressurizer spray valve, the opening-closing instruction signal comprises an opening instruction signal and a closing instruction signal;

The priority of the closing instruction signal is higher than that of the opening instruction signal, and the priority of the opening instruction signal is higher than that of the closed-loop regulating instruction signal.

In the method for controlling a pressurizer spray valve, if the external instruction signal is a closed-loop regulating instruction signal, the closed-loop regulating control is performed on the electromagnetically driven valve, and the method comprises the following steps of:

If the external instruction signal is a closed-loop regulating instruction signal, the main control module compares the position detection signal output by the signal conditioning module with the closed-loop regulating instruction signal, and outputs a closed-loop regulating control instruction according to the comparison result to perform closed-loop regulating control on the electromagnetically driven valve.

The method for controlling the pressurizer spray valve according to the present invention further comprises:
A current detection module detects the current of the electromagnetically driven valve and outputs a current detection signal;
And the main control module adjusts the closed-loop regulating instruction according to the current detection signal so as to perform compensation control.

The device and the method for controlling a pressurizer spray valve have the advantages as follow: a valve regulating control loop and a valve opening-closing control loop, wherein the valve regulating control loop comprises a main control module and a signal conditioning module; The opening-closing control module and the priority control module are respectively used for executing opening-closing control and priority control; the signal conditioning module is used for converting a position detection signal of the valve and then transmits the position detection signal to the main control module; and the main control module is used for performing closed-loop regulating control according to the position detection signal and a closed-loop regulating instruction signal. By arranging the valve opening-closing control loop and the valve regulating control loop, the electromagnetically driven valve can be subjected to full-open control, full-close control and closed-loop regulating control, the stable control of the valve under various working conditions can be ensured, and the safe and stable operation of a nuclear power station can be ensured.

### BRIEF DESCRIPTION OF THE SEVERAL VIEWS OF THE DRAWINGS

The present invention will be further described with reference to the accompanying drawings and embodiments, in which:
Fig. 1 is a logic block diagram of a device for controlling a pressurizer spray valve according to the present invention;
Fig. 2 is a schematic diagram of device for controlling a pressurizer spray valve according to the present invention;
Fig. 3 is a schematic flow chart of a method for controlling a pressurizer spray valve according to the present invention.

### DETAILED DESCRIPTION OF THE INVENTION

The technical solutions in the embodiments of the present invention will be clearly and completely described below in conjunction with the accompanying drawings in the embodiments of the present invention. Obviously, the described embodiments are only a part of the embodiments, not all of the embodiments. Based on the embodiments of the present invention, all other embodiments obtained by those of ordinary skill in the art without creative work belong to the scope of protection of the present invention.

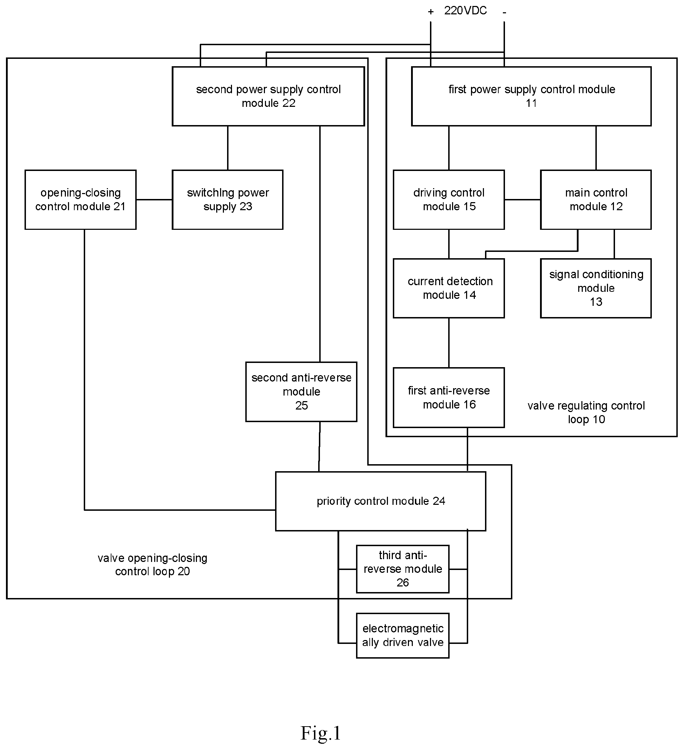

Fig. 1 shows a device for controlling a pressurizer spray valve provided by the present invention, which can be applied to the opening-closing and regulating control of an electromagnetically driven pressurizer spray valve in a nuclear power plant. Specifically, as shown in Fig. 1, the device for controlling a pressurizer spray valve includes a valve regulating control loop 10 and a valve opening-closing control loop 20.The valve regulating control loop 10 is used for realizing closed-loop control of the regulating of the electromagnetically driven valve, the valve opening-closing control loop 20 is used for realizing open-loop control of the opening-closing of the electromagnetically driven valve, and the priority of the valve opening-closing control loop 20 is higher than that of the valve regulating control loop 10, that is, when the external instruction signal is opening-closing control, the valve opening-closing control loop 20 works, and the valve regulating control loop 10 does not work.The valve regulating control loop 10 works only when the external opening instruction signal or closing instruction signals do not exist (that is, only the regulating signal exists).It should be noted that the electromagnetically driven valve in the embodiment of the present invention is an electromagnetically driven control valve.

Specifically, as shown in Fig. 1, in an embodiment, the valve regulating control loop 10 includes a main control module 12 and a signal conditioning module 13, and the valve opening-closing control loop 20 includes a priority control module 24 and an opening-closing control module 21.

Wherein, the opening-closing control module 21 and the priority control module 24 are respectively used for executing opening-closing control and priority control; the signal conditioning module 13 is used for converting the position detection signal of a valve and then transmits the position detection signal to the main control module 12; and the main control module 12 is used for performing closed-loop regulating control according to a position detection signal and a closed-loop regulating instruction signal.

Specifically, the opening-closing control module 21 is configured to perform full-open control according to an opening instruction signal, or perform full-close control according to a closing instruction signal. The opening instruction signal is a full-open signal, and the closing instruction signal is a full-close signal. Optionally, in an embodiment, the opening-closing control module 21 includes an opening instruction control unit and a closing instruction control unit. The opening instruction control unit is used for executing the full-open control, and the closing instruction control unit is used for executing the full-close control; when the opening instruction control unit executes the full-open control or the closing instruction control unit executes the full-close control, the valve regulating control loop 10 does not work. Specifically, in this embodiment, since the priority of the closing instruction signal is higher than that of the opening instruction signal, and the priority of the opening instruction signal is higher than that of the closed-loop regulating instruction signal, when the opening instruction signal and the closing instruction signal come at the same time, the closing instruction control unit works, and the opening instruction control unit does not work; Alternatively, when the opening instruction signal and the closed-loop regulating instruction signal come at the same time, the opening instruction control unit works and the valve regulating control loop 10 does not work, or when the closing instruction signal and the closed-loop regulating instruction signal come at the same time, the closing instruction control unit works and the valve regulating control loop 10 does not work.

In an embodiment, the on-off of the priority control module 24 is controlled by the opening-closing control module 21. Therefore, the opening-closing control and the priority control of the electromagnetically driven valve can be realized through the control of the opening-closing control module 21.

In an embodiment, the signal conditioning module 13 is an LVDT (Linear Variable Differential Transformer) signal conditioning module. The signal conditioning module 13 can convert the signal of the linear differential transformer installed on the electromagnetically driven valve into a standard position detection signal, which is a 4 to 20mA signal. Then the 4 to 20mA signal is transmitted to the main control module 12, the main control module 12 compares the 4 to 20mA signal as a feedback signal with the received external closed-loop regulating instruction signal, so as to realize the closed-loop regulating control of the electromagnetically driven valve. The other route is transmitted by the main control module 12 to another control system (such as a DCS (digital control and instrumentation) system of a nuclear power plant).At the same time, the 4 to 20mA signal is also displayed in real time by the main control module 12 to display the actual opening of the electromagnetically driven valve. The 4 to 20mA signal indicates the actual valve stem position of the valve.

In an embodiment, on one hand, the main control module 12 displays the standard position detection signal transmitted by the signal conditioning module 13 in real time, so as to display the actual opening degree of the electromagnetically driven valve in real time, and on the other hand, the main control module 12 compares the position detection signal as a feedback signal with an externally input closed-loop regulating instruction signal. And perform closed-loop regulating on that electromagnetically driven valve according to the comparison result. Optionally, in an embodiment, the main control module 12 may be a microprocessor-based controller or a controller based on FPGA technology.

Further, as shown in Fig. 1, the valve regulating control loop 10 further includes a current detection module 14, wherein the current detection module 14 is configured to detect the current of the electromagnetically driven valve and output a current detection signal to the main control module 12, and the main control module 12 performs compensation control according to the current detection signal. By arranging the current detection module 14, the current of the power supply circuit of the electromagnetically driven valve can be detected in real time, and the main control module 12 calculates the coil resistance of the electromagnetically driven valve according to the current detection signal detected in real time, And the stability of the closed-loop regulating control of the electromagnetically driven valve is enhanced. Specifically, the coil resistance of the electromagnetically driven valve increases as the temperature increases. At the same PWM duty ratio, the current flowing through the coil varies. Therefore, by detecting the current flowing through the coil, the internal resistance of the coil can be calculated according to the voltage and current, and then compared with the internal resistance in the cold state, the duty ratio of PWM is adjusted in real time, the valve position fluctuation caused by the temperature rise of the coil is compensated, and the self-stability of the closed-loop regulating control of the electromagnetically driving type valve is enhanced. Optionally, in an embodiment, the current detection module 14 may be a current transformer.

Further, as shown in Fig. 1, in an embodiment, the valve regulating control loop 10 further includes a driving control module 15, wherein the driving control module 15 is configured to execute the driving control of the electromagnetically driven valve according to the closed-loop regulating control instruction output by the main control module 12.Specifically, in an embodiment, the driving control module 15 is configured to control the on-off of the DC power supply circuit of the electromagnetically driven valve according to the closed-loop regulating control instruction, so as to realize PWM control of different duty ratios and realize closed-loop regulating control of the electromagnetically driven valve. Optionally, in an embodiment, the driving control module 15 may be implemented by using insulated gate bipolar transistors (IGBT).

Further, as shown in Fig. 1, the valve regulating control loop 10 further includes a first anti-reverse module 16, wherein the first anti-reverse module 16 is configured to prevent reverse current.

Further, as shown in Fig. 1, the valve regulating control loop 10 further includes a first power supply control module 11, wherein the first power supply control module 11 is configured to control power supply to the valve regulating control loop 10.

Further, as shown in Fig. 1, in an embodiment, the valve opening-closing control loop 20 further includes a second power supply control module 22, wherein the second power supply control module 22 is configured to control the power supply of the valve opening-closing control loop 20. Specifically, the second power supply control module 22 is provided to perform on-off control of the power supply to the valve opening-closing control loop 20.

Further, as shown in Fig. 1, the valve opening-closing control loop 20 further comprises a second anti-reverse module 25 and a third anti-reverse module 26, wherein the second anti-reverse module 25 is arranged between the second power supply control module 22 and the priority control module 24, and is used for preventing reverse current of the power supply circuit of the electromagnetically driven valve. The third anti-reverse module 26 is arranged between the positive end and the negative end of the electromagnetically driven valve, and is used for preventing the instantaneous reverse current generated by the electromagnetically driven valve from reversing when it loses power.

Further, as shown in Fig. 1, in an embodiment, the valve opening-closing control loop 20 further comprises a switching power supply 23, wherein the switching power supply 23 is used for supplying electric energy to the valve opening-closing control loop 20.

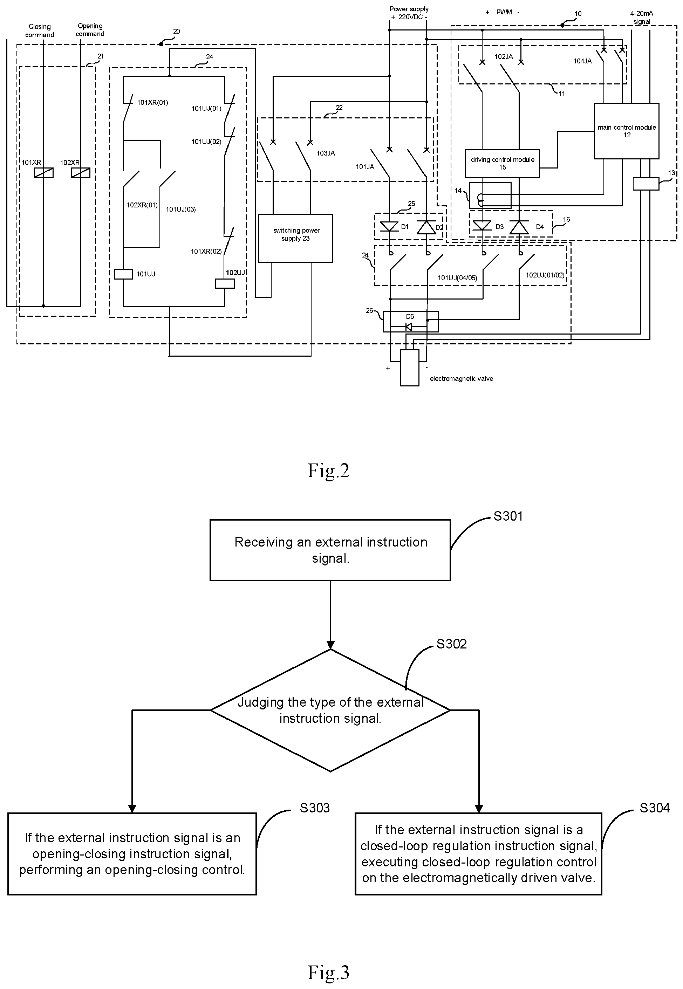

As shown in Fig. 2, it is a preferred embodiment of adevice for controlling a pressurizer spray valve provided by the present invention. Specifically, as shown in Fig. 2, in this embodiment, the first power supply control module 11 includes a circuit breaker 102JA and a circuit breaker 104JA.The circuit breaker 102JA is connected in series to the second power supply circuit of the electromagnetically driven valve, and the circuit breaker 104JA is connected in series to the power supply circuit of the main control module 12.The second power supply control module 22 includes a circuit breaker 101JA and a circuit breaker 103JA.The circuit breaker 101JA is connected in series to the first power supply circuit of the electromagnetically driven valve, and the circuit breaker 103JA is connected in series to the power supply circuit of the switching power supply 23. The opening instruction control unit includes a second relay, and the closing instruction control unit includes a first relay. The first relay is a normally-closed contact, and when the first relay receives a closing instruction signal and/or the second relay receives an opening instruction signal, the priority control module 24 controls the valve regulating control loop 10 not to work.

As shown in Fig. 2, in an embodiment, the priority control module 24 includes a first normally-closed contact (e.g., 101 XR (01) in Fig. 2) and a second normally-closed contact (e.g., 101 XR (02) in Fig. 2) of the first relay, a normally-open contact of the second relay (e.g., 102 XR (01) in Fig. 2), a first contactor and a second contactor. The first normally-closed contact of the first relay, the normally-open contact of the second relay, and the coil (e.g., 101UJ in Fig. 2) of the first contactor are connected in series in sequence and then connected with the positive end and the negative end of the switching power supply 23;The first normally-closed contact (e.g., 101UJ (01) in Fig. 2) of the first contactor, the second normally-closed contact (e.g.,101 UJ (02) in Fig. 2) of the first contactor, the second normally-closed contact of the first relay, and the coil of the second contactor (e.g., 102 UJ in Fig. 3) are sequentially connected in series and then connected with the positive end and the negative end of the switch power supply 23;The first normally-open contact (e.g., 101UJ (03) in Fig. 2) of the first contactor is connected in parallel with the normally-open contact of the second relay, and the second normally-open contact (e.g., 101UJ (04) in Fig. 2) of the first contactor and the third normally-open contacts (e.g., 101 UJ (05) in Fig, 2) are arranged on the first power supply circuit of the electromagnetically driven valve; The first normally-open contact (e.g., 102UJ (01) in Fig. 2) of the second contactor and the second normally-open contact (e.g., 102UJ (02) in Fig. 2) of the second contactor are disposed on the second power supply circuit of the electromagnetically driven valve.

In an embodiment, as shown in Fig. 2, the opening-closing control and the priority control are realized by the first relay, the second relay, the first contactor, and the second contactor. In Fig. 2, the opening and closing control take priority over the regulating control, the priority of the closing instruction signal is higher than that of the opening instruction signal, and the priority of the opening instruction signal is higher than that of the closed-loop regulating instruction signal. That is, as long as one of the opening instruction signal and the closing instruction signal exists, the contactor of the valve regulating control loop 10 is cut off, and only when the opening instruction signal and the closing instruction signal do not exist, the contactor of the valve regulating control loop 10 is turned on, so as to ensure that the on and off control are prior to the regulating control. In the valve opening-closing control loop 20, the contact of the first relay is set to the normally-closed mode, so that the contactor coil is not energized when the opening instruction signal and the closing instruction signal come at the same time, thereby ensuring that the priority of the closing instruction signal is higher than that of the opening instruction signal.

Specifically, as shown in Fig. 2, when the opening instruction signal and the closing instruction signal come at the same time, the coil of the first relay is energized, at this time, the first normally-closed contact (e.g., 101XR (01) in Fig. 2) of the first relay is opened and the second normally-closed contact (e.g., 101XR (02) in Fig.2) of the first relay is opened. The power supply of the coil of the first contactor (e.g. 101UJ in Fig. 2) and the coil of the second contactor (e.g. 102UJ in Fig. 2) is cut off, which ensures that the priority of the closing instruction signal is higher than that of the opening instruction signal, and is also higher than that of the closed-loop regulating instruction signal. When an opening instruction signal is externally input, since the coil of the first relay is not energized, the first normally-closed contact and the second normally-closed contact thereof are kept in a closed state, at this time, the coil of the second relay is energized to close the first normally-open contact thereof (e.g. 102XR (01) in Fig.2). A coil (e.g. 101UJ in Fig. 2) of the first contactor is energized, a first normally-open contact (e.g. 101UJ (03) in Fig. 2) of the first contactor is closed, and a first normally-closed contact (e.g. 101 UJ (01) in Fig.2). When the power supply of the coil (e.g. 102UJ in Fig. 2) of the second contactor is cut off, the second contactor will not be energized, the first normally-open contact (e.g. 102UJ (01) in Fig. 2) and the second normally-open contact (e.g. 102 UJ (02) in Fig.2). The second normally-open contact (e.g. 101UJ (04) in Fig. 2) and the third normally-open contact (e.g. 101UJ (05) in Fig. 2) of the first contactor are both closed, and the power supply circuit of the electromagnetically driven valve is connected to complete the full-open control, which ensures that the priority of opening control is higher than that of regulating control. When the opening instruction signal and the closing instruction signal do not exist, the coil of the first contactor has no electricity, and the normally-closed contact of the first contactor is closed (e.g. 101UJ (01) and 101UJ (02) in Fig. 2 and the normally-closed contact of the first relay is closed (e.g. 101XR (02) in Fig. 2)), so that the coil of the second contactor is energized. The first normally-open contact and the second normally-open contact of the second contactor are both closed, so that the regulating loop is switched on, and the closed-loop regulating control of the electromagnetically driven valve is realized.

As shown in Fig. 2, the second power supply control module 22 includes a circuit breaker 101JA and a circuit breaker 103JA, and the on-off control of the first power supply circuit of the electromagnetically drive valve can be realized by the circuit breaker 101JA;The on-off control of the power supply of the switching power supply 23 can be realized by the circuit breaker 103JA, thereby realizing the on-off control of the power supply circuit of the valve opening-closing control loop 20.

As shown in Fig. 2, the first power supply control module 11 includes a circuit breaker 102JA and a circuit breaker 104JA. The circuit breaker 102JA can control the on-off of the second power supply circuit of the electromagnetically drive valve, and the circuit breaker 104JA can control the on-off of the power supply of the main control module 12.

As shown in Fig. 2, the first anti-reverse module 16 includes a third diode D3 and a fourth diode D4; the second anti-reverse module 25 includes a first diode D1 and a second diode D2; and the third anti-reverse module 26 includes a fifth diode D5.

As shown in Fig. 2, the anode of the first diode D1 is connected with the positive end of a 220VDC power supply through a circuit breaker 101JA, the cathode of the first diode D1 is connected with the positive end of an electromagnetically driven valve through a first contactor, and the cathode of the second diode D2 is connected to the negative end of the 220VDC power supply through a circuit breaker 101JA.The anode of the third diode D3 is connected with the positive end of a driving control module 15; the cathode of the third diode D3 is connected with the positive end of the electromagnetically driving type valve through a second contactor; The anode of the fourth diode D4 is connected with the negative end of the electromagnetically driven valve through a second contactor, the anode of the fifth diode D5 is connected with the negative end of the electromagnetically driven valve, and the cathode of the fifth diode D5 is connected to the positive end of an electromagnetically drive valve.

Fig. 3 shows a preferred embodiment of a method for controlling a pressurizer spray valve provided by the present invention. The method for controlling a pressurizer spray valve can be realized by the device for controlling a pressurizer spray valve disclosed by the embodiment of the invention.

Specifically, as shown in Fig. 3, the method for controlling a pressurizer spray valve comprises the following steps:
Step S301, receivingan external instruction signal.

In an embodiment, the opening-closing instruction signal includes an opening instruction signal and a closing instruction signal. The priority of the closing instruction signal is higher than that of the opening instruction signal, and the priority of the opening instruction signal is higher than that of the closed-loop regulating instruction signal.

Step S302, Judging the type of the external instruction signal.

Step S303, if the external instruction signal is an opening-closing instruction signal, performing an opening-closing control.

Specifically, as shown in Fig. 2, the first relay, the second relay, the first contactor and the second contactor cooperate to realize the priority control, a normally-closed contact of the first contactor and a normally-closed contact of the first relay are serially connected into a second contactor coil loop of a regulating control power supply loop, and when the valve opening-closing control loop 20 is electrified or when relevant instructions are given, The second contactor is disconnected to realize that the opening-closing control is prior to the regulating control; The normally-closed contact of the first relay and the normally-open contact of the second relay are serially connected into a contactor coil (a coil of the first contactor) of an opening-closing control power supply circuit to ensure that the first contactor and the second contactor are disconnected under the condition that a relevant instruction signal exists, and only under the condition that no closing instruction exists and an opening instruction exists, the first contactor is electrified, and the contact is connected; It is ensured that the closing instruction signal has priority over the opening instruction signal.

Step S304, if the external instruction signal is a closed-loop regulating instruction signal, executing closed-loop regulating control on the electromagnetically driven valve.

In this embodiment, if the external instruction signal is a closed-loop regulating instruction signal, executing the closed-loop regulating control on the electromagneticallydriven valve comprises: if the external instruction signal is a closed-loop regulating instruction signal, the main control module 12 compares the position detection signal output by the signal conditioning module 13 with the closed-loop regulating instruction signal; And output a closed-loop regulating control instruction according to the comparison result to execute the closed-loop regulating control on the electromagnetically driven valve.

Specifically, in this embodiment, a main controller based on a microprocessor or FPGA is used for regulating and control. In the regulating control mode, the main controller receives a control instruction signal (closed-loop regulating instruction signal) from an external control system (e.g. a DCS system of a nuclear power plant), and at the same time, the main controller acquires a position detection signal of a valve through the signal conditioning module 13, and sends a closed-loop regulating control instruction to the driving control module 15 after comparison and calculation in the main controller. The driving control module 15 is connected in series to the regulating control power supply circuit, and the driving control module 15 controls the duty ratio of the DC power output according to the instruction of the main controller, so as to achieve the purpose of controlling the valve opening of the electromagnetically driven valve.

Further, in an embodiment, the method for controlling a pressurizer spray valve further includes: a current detection module 14 detects the current of the electromagnetically driven valve and outputs a current detection signal; and a main control module 12 adjusts the closed-loop regulating instruction according to the current detection signal, so as to perform compensation control.

Specifically, the temperature of the coil of the electromagnetically driven valve rises and the internal resistance increases after a long time of operation, the current of the valve regulating control loop 10 is measured in real time by the current transformer, calculation is performed in the main controller to judge whether the internal resistance of the coil changes, and if so, the output is changed by the compensation control loop to enhance the stability of regulating control.

The invention realizes the opening-closing control and the regulating control of a electromagnetically driven valve, realizes the priority control of opening, closing and regulating functions, and carries out physical isolation and signal isolation on the opening-closing control and regulating control devices in the control box or the control cabinet to ensure that the function failure of a low priority part does not affect the function of a high priority part; An IGBT is used to control the duty ratio of the DC power supply to achieve PWM regulation and control, and to compensate the fluctuation caused by the temperature rise and the internal resistance increase of the electromagnetically driven valve coil after a long time of operation, so as to ensure the stability of the control.

In this specification, each embodiment is described in a progressive manner, and each embodiment focuses on the differences from other embodiments, and the same and similar parts of each embodiment can be referred to each other. For the device disclosed in the embodiment, since it corresponds to the method disclosed in the embodiment, the description is relatively simple, and related parts can be described in the method part.

Those skilled in the art will further appreciate that the elements and algorithm steps of the various examples described in connection with the embodiments disclosed herein can be implemented as electronic hardware, computer software, or a combination of both, and that the components and steps of the various examples have been described generally in terms of function in the foregoing description for the purpose of clearly illustrating the interchangeability of hardware and software. Whether these functions are implemented in hardware or software depends on the specific application and design constraints of the technical solution. Skilled artisans may implement the described functionality using different methods for each particular application, but such implementations should not be construed as exceeding the scope of the invention.

The steps of a method or algorithm described in connection with the embodiments disclosed herein may be embodied directly in hardware, in a software module executed by a processor, or in a combination of the two. The software module may be placed in a random access memory (RAM), a memory, a read only memory (ROM), an electrically programmable ROM, an electrically erasable programmable ROM, a register, a hard disk, a removable disk, a CD-ROM, or any other form of storage medium known in the art.

The above embodiments are only for illustrating the technical concepts and features of the present invention, and are intended to enable those skilled in the art to understand the contents of the present invention and to implement the same, and do not limit the scope of protection of the invention.

## Claims

1. A device for controlling a pressurizer spray valve comprises: a valve regulating control loop (10) and a valve opening-closing control loop (20);
the valve regulating control loop (10) comprises a main control module (12) and a signal conditioning module (13), and the valve opening-closing control loop (20) comprises a priority control module (24) and an opening-closing control module (21); and the valve opening-closing control loop (20) further comprises a switching power supply (23); the switching power supply (23) is configured to provide electric energy for the valve opening-closing control loop (20);
the opening-closing control module (21) and the priority control module (24) are respectively configured to execute opening-closing control and priority control; the opening-closing control module (21) comprises an opening instruction control unit and a closing instruction control unit; the opening instruction control unit is configured to execute full-open control, the closing instruction control unit is configured to execute full-close control, and the valve regulating control loop (20) does not work when the opening instruction control unit executes full-open control or the closing instruction control unit executes full-close control;
the opening instruction control unit comprises a second relay (102XR), and the closing instruction control unit comprises a first relay (101XR); the first relay adopts a normally-closed contact, and the priority control module (24) controls the valve regulating control loop (10) not to work when the first relay (101XR) receives a closing instruction signal and/or the second relay (102XR) receives an opening instruction signal;
the priority control module (24) comprises a first normally-closed contact (101XR (01)) and a second normally-closed contact (101XR (02)) of the first relay (101XR), a normally-open contact (102XR (01)) of the second relay (102XR), a first contactor and a second contactor;
the first normally-closed contact (101XR (01)) of the first relay (101XR), the normally-open contact (102XR (01)) of the second relay (102XR) and a coil of the first contactor (101UJ) are sequentially connected in series and then connected with a positive end and a negative end of the switching power supply (23); a first normally-closed contact of the first contactor (101UJ (01)), a second normally-closed contact of the first contactor (101UJ (02)), the second normally-closed contact (101XR (02)) of the first relay (101XR) and a coil of the second contactor (102UJ) are sequentially connected in series and then connected with the positive end and the negative end of the switching power supply (23); the first normally-open contact of the first contactor (101UJ (01)) is connected in parallel with the normally-open contact (102XR (01)) of the second relay (102XR);
the signal conditioning module (13) is configured to convert a position detection signal of a valve, and then transmits the position detection signal to the main control module (12);
and the main control module (12) is configured to perform closed-loop regulating control according to the position detection signal and a closed-loop regulating instruction signal.

2. The device for controlling a pressurizer spray valve according to claim 1, wherein the valve regulating control loop (10) further comprises a driving control module (15);
the driving control module (15) is configured to execute drive control on an electromagnetically driven valve according to the closed-loop regulating control instruction output by the main control module (12).

3. The device for controlling a pressurizer spray valve according to claim 1, wherein the valve regulating control loop (10) further comprises a current detection module (14);
the current detection module (14) is configured to detect the current of the electromagnetically driven valve and outputting a current detection signal to the main control module (12), and the main control module (12) executes compensation control according to the current detection signal.

4. The device for controlling a pressurizer spray valve according to claim 1, wherein the valve regulating control loop (10) further comprises a first anti-reverse module (16);
the first anti-reverse module (16) is configured to prevent reverse current.

5. The device for controlling a pressurizer spray valve according to claim 1, wherein the valve regulating control loop (10) further comprises a first power supply control module (11);
the first power supply control module (11) is configured to execute a power supply control of the valve regulating control loop (10).

6. The device for controlling a pressurizer spray valve according to claim 1, wherein the valve opening-closing control loop (20) further comprises a second power supply control module (22);
the second power supply control module (22) is configured to execute a power supply control of the valve opening-closing control loop (20).

7. The device for controlling a pressurizer spray valve according to claim 1, wherein the second normally-open contact of the first contactor (101UJ (02)) and a third normally-open contact of the first contactor (101UJ (03)) are disposed on a first power supply circuit of an electromagnetically driven valve; a first normally-open contact of the second contactor and a second normally-open contact of the second contactor are arranged on a second power supply circuit of the electromagnetically driven valve.

8. The device for controlling a pressurizer spray valve according to claim 1, wherein the valve opening-closing control loop (20) further comprises a second anti-reverse module (25) and a third anti-reverse module (26);
the second anti-reverse module (25) is configured to prevent the current of the power supply circuit of the electromagnetically driven valve from being reversed;
the third anti-reverse module (26) is arranged between a positive end and a negative end of the electromagnetically driven valve and configured to prevent an instantaneous reverse current generated by the electromagnetically driven valve from reversing when it loses power.

9. A method for controlling a pressurizer spray valve, applied to the device for controlling a pressurizer spray valve according to any one of claims 1-8, wherein the method comprises the following steps:
receiving an external instruction signal (S301);
judging the type of the external instruction signal (S302);
if the external instruction signal is an opening-closing instruction signal, executing opening-closing control (S303);
and if the external instruction signal is a closed-loop regulating instruction signal, execute closed-loop regulating control on the electromagnetically driven valve (S304).

10. The method for controlling a pressurizer spray valve according to claim 9, wherein the opening-closing instruction signal comprises an opening instruction signal and a closing instruction signal;
the priority of the closing instruction signal is higher than that of the opening instruction signal, and the priority of the opening instruction signal is higher than that of the closed-loop regulating instruction signal.

11. The method for controlling a pressurizer spray valve according to claim 9, wherein the external instruction signal is a closed-loop regulating instruction signal, and performing closed-loop regulating control on the electromagnetically driven valve comprises:
if the external instruction signal is a closed-loop regulating instruction signal, the main control module (12) compares the position detection signal output by the signal conditioning module (13) with the closed-loop regulating instruction signal, and outputs a closed-loop regulating control instruction according to the comparison result to perform closed-loop regulating control on the electromagnetically driven valve.

12. The method for controlling a pressurizer spray valve according to claim 11, wherein the method further comprises:
a current detection module (14) detects the current of the electromagnetically driven valve and outputs a current detection signal;
and the main control module (12) adjust the closed-loop regulating instruction according to the current detection signal so as to perform compensation control.

## Patentansprüche

1. Vorrichtung zum Steuern eines Druckstabilisatorsprühventils, umfassend: einen Ventilregelkreis (10) und einen Ventilöffnungs-/- schließregelkreis (20);
der Ventilregelkreis (10) umfasst ein Hauptsteuermodul (12) und ein Signalaufbereitungsmodul (13) und der Ventilöffnungs-/- schließregelkreis (20) umfasst ein Prioritätssteuermodul (24) und ein Öffnungs-/Schließsteuermodul (21); und der Ventilöffnungs-/-schließregelkreis (20) umfasst ferner ein Schaltnetzteil (23); das Schaltnetzteil (23) ist dazu ausgelegt, elektrische Energie für den Ventilöffnungs-/-schließregelkreis (20) bereitzustellen;
das Öffnungs-/Schließsteuermodul (21) und das Prioritätssteuermodul (24) sind dazu ausgelegt, Öffnungs-/Schließsteuerung beziehungsweise Prioritätssteuerung auszuführen; das Öffnungs-/Schließsteuermodul (21) umfasst eine Öffnungsanweisungssteuereinheit und eine Schließanweisungssteuereinheit; die Öffnungsanweisungssteuereinheit ist dazu ausgelegt, Vollöffnungssteuerung auszuführen, die Schließanweisungssteuereinheit ist dazu ausgelegt, Vollschließungssteuerung auszuführen, und der Ventilregelkreis (20) arbeitet nicht, wenn die Öffnungsanweisungssteuereinheit Vollöffnungssteuerung ausführt oder die Schließanweisungssteuereinheit Vollschließungssteuerung ausführt;
die Öffnungsanweisungssteuereinheit umfasst ein zweites Relais (102XR) und die Schließanweisungssteuereinheit umfasst ein erstes Relais (101XR); das erste Relais verwendet einen normalerweise geschlossenen Kontakt und das Prioritätssteuermodul (24) steuert den Ventilregelkreis (10) so, dass er nicht arbeitet, wenn das erste Relais (101XR) ein Schließanweisungssignal empfängt und/oder das zweite Relais (102XR) ein Öffnungsanweisungssignal empfängt;
das Prioritätssteuermodul (24) umfasst einen ersten normalerweise geschlossenen Kontakt (101XR (01)) und einen zweiten normalerweise geschlossenen Kontakt (101XR (02)) des ersten Relais (101XR), einen normalerweise offenen Kontakt (102XR (01)) des zweiten Relais (102XR), ein erstes Schütz und ein zweites Schütz;
der erste normalerweise geschlossene Kontakt (101XR (01)) des ersten Relais (101XR), der normalerweise offene Kontakt (102XR (01)) des zweiten Relais (102XR) und eine Spule des ersten Schützes (101UJ) sind hintereinander in Reihe geschaltet und dann mit einem positiven Ende und einem negativen Ende des Schaltnetzteils (23) verbunden; ein erster normalerweise geschlossener Kontakt des ersten Schützes (101UJ (01)), ein zweiter normalerweise geschlossener Kontakt des ersten Schützes (101UJ (02)), der zweite normalerweise geschlossene Kontakt (101XR (02)) des ersten Relais (101XR) und eine Spule des zweiten Schützes (102UJ) sind hintereinander in Reihe geschaltet und dann mit dem positiven Ende und dem negativen Ende des Schaltnetzteils (23) verbunden; der erste normalerweise offene Kontakt des ersten Schützes (101UJ (01)) ist zu dem normalerweise offenen Kontakt (102XR (01)) des zweiten Relais (102XR) parallelgeschaltet;
das Signalaufbereitungsmodul (13) ist dazu ausgelegt, ein Positionserkennungssignal eines Ventils umzuwandeln und das Positionserkennungssignal dann an das Hauptsteuermodul (12) zu senden;
und das Hauptsteuermodul (12) ist dazu ausgelegt, Steuerung von Regelung mit geschlossenem Kreis gemäß dem Positionserkennungssignal und einem Signal zur Anweisung von Regelung mit geschlossenem Kreis durchzuführen.

2. Vorrichtung zum Steuern eines Druckstabilisatorsprühventils nach Anspruch 1, wobei der Ventilregelkreis (10) ferner ein Antriebssteuermodul (15) umfasst;
das Antriebssteuermodul (15) dazu ausgelegt ist, Antriebssteuerung eines elektromagnetisch angetriebenen Ventils gemäß der von dem Hauptsteuermodul (12) ausgegebenen Anweisung zur Steuerung der Regelung mit geschlossenem Kreis auszuführen.

3. Vorrichtung zum Steuern eines Druckstabilisatorsprühventils nach Anspruch 1, wobei der Ventilregelkreis (10) ferner ein Stromerfassungsmodul (14) umfasst;
das Stromerfassungsmodul (14) dazu ausgelegt ist, den Strom des elektromagnetisch angetriebenen Ventils zu erfassen und ein Stromerfassungssignal an das Hauptsteuermodul (12) auszugeben, und das Hauptsteuermodul (12) eine Kompensationssteuerung gemäß dem Stromerfassungssignal durchführt.

4. Vorrichtung zum Steuern eines Druckstabilisatorsprühventils nach Anspruch 1, wobei der Ventilregelkreis (10) ferner ein erstes Rückflusssperrmodul (16) umfasst;
das erste Rückflusssperrmodul (16) dazu ausgelegt ist, Rückstrom zu verhindern.

5. Vorrichtung zum Steuern eines Druckstabilisatorsprühventils nach Anspruch 1, wobei der Ventilregelkreis (10) ferner ein erstes Leistungsversorgungsteuermodul (11) umfasst;
wobei das erste Leistungsversorgungssteuermodul (11) dazu ausgelegt ist, eine Leistungsversorgungssteuerung des Ventilregelkreises (10) auszuführen.

6. Vorrichtung zum Steuern eines Druckstabilisatorsprühventils nach Anspruch 1, wobei der Ventilöffnungs-/-schließregelkreis (20) ferner ein zweites Leistungsversorgungsteuermodul (22) umfasst;
wobei das zweite Leistungsversorgungssteuermodul (22) dazu ausgelegt ist, eine Leistungsversorgungssteuerung des Ventilöffnungs-/-schließregelkreises (20) auszuführen.

7. Vorrichtung zum Steuern eines Druckstabilisatorsprühventils nach Anspruch 1, wobei der zweite normalerweise offene Kontakt des ersten Schützes (101UJ (02)) und ein dritter normalerweise offener Kontakt des ersten Schützes (101UJ (03)) in einem ersten Leistungsversorgungskreis eines elektromagnetisch angetriebenen Ventils angeordnet sind; ein erster normalerweise offener Kontakt des zweiten Schützes und ein zweiter normalerweise offener Kontakt des zweiten Schützes in einem zweiten Leistungsversorgungskreis des elektromagnetisch angetriebenen Ventils angeordnet sind.

8. Vorrichtung zum Steuern eines Druckstabilisatorsprühventils nach Anspruch 1, wobei der Ventilöffnungs-/-schließregelkreis (20) ferner ein zweites Rückflusssperrmodul (25) und ein drittes Rückflusssperrmodul (26) umfasst;
das zweite Rückflusssperrmodul (25) dazu ausgelegt ist, zu verhindern, dass der Strom des Leistungsversorgungskreises des elektromagnetisch angetriebenen Ventils in Rückwärtsrichtung fließt;
das dritte Rückflusssperrmodul (26) zwischen einem positiven und einem negativen Ende des elektromagnetisch angetriebenen Ventils angeordnet und dazu ausgelegt ist, zu verhindern, dass ein momentaner Rückstrom, der von dem elektromagnetisch angetriebenen Ventil erzeugt wird, bei Leistungsverlust in Rückwärtsrichtung fließt.

9. Verfahren zur Steuerung eines Druckstabilisatorsprühventils, das auf die Vorrichtung zum Steuern eines Druckstabilisatorsprühventils nach einem der Ansprüche 1-8 angewendet wird, wobei das Verfahren die folgenden Schritte umfasst:
Empfangen eines externen Anweisungssignals (S301);
Beurteilen der Art des externen Anweisungssignals (S302);
falls es sich bei dem externen Anweisungssignal um ein Öffnungs-/Schließanweisungssignal handelt, Ausführen von Öffnungs-/Schließsteuerung (S303);
und falls es sich bei dem externen Steuersignal um ein Signal zur Anweisung von Regelung mit geschlossenem Kreis handelt, Ausführen von Steuerung der Regelung mit geschlossenem Kreis an dem elektromagnetisch angetriebenen Ventil (S304).

10. Verfahren zur Steuerung eines Druckhalter-Sprühventils nach Anspruch 9, wobei das Öffnungs-/Schließanweisungssignal ein Öffnungsanweisungssignal und ein Schließanweisungssignal umfasst;
die Priorität des Schließanweisungssignal höher ist als die des Öffnungsanweisungssignal und die Priorität des Öffnungsanweisungssignal höher ist als die des Signals zur Anweisung von Regelung mit geschlossenem Kreis.

11. Verfahren zur Steuerung eines Druckstabilisatorsprühventils nach Anspruch 9, wobei das externe Anweisungssignal ein Signal zur Anweisung von Regelung mit geschlossenem Kreis ist und das Durchführen von Steuerung der Regelung mit geschlossenem Kreis an dem elektromagnetisch angetriebenen Ventil Folgendes umfasst:
falls es sich bei dem externen Anweisungssignal um ein Signal zur Anweisung von Regelung mit geschlossenem Kreis handelt, vergleicht das Hauptsteuermodul (12) das von dem Signalaufbereitungsmodul (13) ausgegebene Positionserkennungssignal mit dem Signal zur Anweisung von Regelung mit geschlossenem Kreis und gibt gemäß dem Vergleichsergebnis eine Anweisung zur Steuerung der Regelung mit geschlossenem Kreis aus, um die Steuerung der Regelung des elektromagnetisch angetriebenen Ventils mit geschlossenem Kreis durchzuführen.

12. Verfahren zur Steuerung eines Druckstabilisatorsprühventils nach Anspruch 11, wobei das Verfahren ferner Folgendes umfasst:
ein Stromerfassungsmodul (14) erfasst den Strom des elektromagnetisch angetriebenen Ventils und gibt ein Stromerfassungssignal aus;
und das Hauptsteuermodul (12) passt die Anweisung von Regelung mit geschlossenem Kreis gemäß dem Stromerfassungssignal an, um Kompensationssteuerung durchzuführen.

## Revendications

1. Dispositif de commande d'une soupape de pulvérisation de stabilisateur de pression qui comprend : une boucle de commande de régulation de soupape (10) et une boucle de commande d'ouverture-fermeture de soupape (20) ;
la boucle de commande de régulation de soupape (10) comprend un module de commande principal (12) et un module de formage de signaux (13), et la boucle de commande d'ouverture-fermeture de soupape (20) comprend un module de commande de priorités (24) et un module de commande d'ouverture-fermeture (21) ; et la boucle de commande d'ouverture-fermeture de soupape (20) comprend en outre une alimentation à découpage (23) ; l'alimentation à découpage (23) est configurée pour fournir de l'énergie électrique à la boucle de commande d'ouverture-fermeture de soupape (20) ;
le module de commande d'ouverture-fermeture (21) et le module de commande de priorités (24) sont respectivement configurés pour exécuter une commande d'ouverture-fermeture et une commande de priorités ; le module de commande d'ouverture-fermeture (21) comprend une unité de commande d'instruction d'ouverture et une unité de commande d'instruction de fermeture ; l'unité de commande d'instruction d'ouverture est configurée pour exécuter une commande d'ouverture complète, l'unité de commande d'instruction de fermeture est configurée pour exécuter une commande de fermeture complète, et la boucle de commande de régulation de soupape (20) ne fonctionne pas lorsque l'unité de commande d'instruction d'ouverture exécute une commande d'ouverture complète ou lorsque l'unité de commande d'instruction de fermeture exécute une commande de fermeture complète ;
l'unité de commande d'instruction d'ouverture comprend un second relais (102XR), et l'unité de commande d'instruction de fermeture comprend un premier relais (101XR) ; le premier relais adopte un contact normalement fermé, et le module de commande de priorités (24) commande à la boucle de commande de régulation de soupape (10) de ne pas fonctionner lorsque le premier relais (101XR) reçoit un signal d'instruction de fermeture et/ou lorsque le second relais (102XR) reçoit un signal d'instruction d'ouverture ;
le module de commande de priorités (24) comprend un premier contact normalement fermé (101XR (01)) et un deuxième contact normalement fermé (101XR (02)) du premier relais (101XR), un contact normalement ouvert (102XR (01)) du second relais (102XR), un premier contacteur et un second contacteur ;
le premier contact normalement fermé (101XR (01)) du premier relais (101XR), le contact normalement ouvert (102XR (01)) du second relais (102XR) et une bobine du premier contacteur (101UJ) sont connectés successivement en série, et puis connectés à une extrémité positive et à une extrémité négative de l'alimentation à découpage (23) ; un premier contact normalement fermé du premier contacteur (101UJ (01)), un deuxième contact normalement fermé du premier contacteur (101UJ (02)), le deuxième contact normalement fermé (101XR (02)) du premier relais (101XR) et une bobine du second contacteur (102UJ) sont connectés successivement en série, et puis connectés à l'extrémité positive et à l'extrémité négative de l'alimentation à découpage (23) ; le premier contact normalement ouvert du premier contacteur (101UJ (01)) est connecté en parallèle au contact normalement ouvert (102XR (01)) du second relais (102XR) ;
le module de formage de signaux (13) est configuré pour convertir un signal de détection de position d'une soupape, et puis transmet le signal de détection de position au module de commande principal (12) ;
et le module de commande principal (12) est configuré pour effectuer une commande de régulation en boucle fermée en fonction du signal de détection de position et d'un signal d'instruction de régulation en boucle fermée.

2. Dispositif de commande d'une soupape de pulvérisation de stabilisateur de pression selon la revendication 1, dans lequel la boucle de commande de régulation de soupape (10) comprend en outre un module de commande d'excitation (15) ;
le module de commande d'excitation (15) est configuré pour exécuter une commande d'excitation sur une soupape à excitation électromagnétique en fonction de l'instruction de commande de régulation en boucle fermée émise par le module de commande principal (12).

3. Dispositif de commande d'une soupape de pulvérisation de stabilisateur de pression selon la revendication 1, dans lequel la boucle de commande de régulation de soupape (10) comprend en outre un module de détection de courant (14) ;
le module de détection de courant (14) est configuré pour détecter le courant de la soupape à excitation électromagnétique et pour envoyer un signal de détection de courant au module de commande principal (12), et le module de commande principal (12) exécute une commande de compensation en fonction du signal de détection de courant.

4. Dispositif de commande d'une soupape de pulvérisation de stabilisateur de pression selon la revendication 1, dans lequel la boucle de commande de régulation de soupape (10) comprend en outre un premier module anti-inversion (16) ;
le premier module anti-inversion (16) est configuré pour éviter un courant inverse.

5. Dispositif de commande d'une soupape de pulvérisation de stabilisateur de pression selon la revendication 1, dans lequel la boucle de commande de régulation de soupape (10) comprend en outre un premier module de commande d'alimentation électrique (11) ;
le premier module de commande d'alimentation électrique (11) est configuré pour exécuter une commande d'alimentation électrique de la boucle de commande de régulation de soupape (10).

6. Dispositif de commande d'une soupape de pulvérisation de stabilisateur de pression selon la revendication 1, dans lequel la boucle de commande d'ouverture-fermeture de soupape (20) comprend en outre un second module de commande d'alimentation électrique (22) ;
le second module de commande d'alimentation électrique (22) est configuré pour exécuter une commande d'alimentation électrique de la boucle de commande d'ouverture-fermeture de soupape (20).

7. Dispositif de commande d'une soupape de pulvérisation de stabilisateur de pression selon la revendication 1, dans lequel le deuxième contact normalement ouvert du premier contacteur (101UJ (02)) et un troisième contact normalement ouvert du premier contacteur (101UJ (03)) sont disposés sur un premier circuit d'alimentation électrique d'une soupape à excitation électromagnétique ; un premier contact normalement ouvert du second contacteur et un deuxième contact normalement ouvert du second contacteur sont agencés sur un second circuit d'alimentation électrique de la soupape à excitation électromagnétique.

8. Dispositif de commande d'une soupape de pulvérisation de stabilisateur de pression selon la revendication 1, dans lequel la boucle de commande d'ouverture-fermeture de soupape (20) comprend en outre un deuxième module anti-inversion (25) et un troisième module anti-inversion (26) ;
le deuxième module anti-inversion (25) est configuré pour éviter l'inversion du courant du circuit d'alimentation électrique de la soupape à excitation électromagnétique ;
le troisième module anti-inversion (26) est agencé entre une extrémité positive et une extrémité négative de la soupape à excitation électromagnétique et configuré pour éviter l'inversion d'un courant inverse instantané généré par la soupape à excitation électromagnétique lorsqu'elle perd de la puissance.

9. Procédé de commande d'une soupape de pulvérisation de stabilisateur de pression, appliqué au dispositif de commande d'une soupape de pulvérisation de stabilisateur de pression selon l'une quelconque des revendications 1 à 8, dans lequel le procédé comprend les étapes suivantes :
réception d'un signal d'instruction externe (S301) ;
évaluation du type du signal d'instruction externe (S302) ;
si le signal d'instruction externe est un signal d'instruction d'ouverture-fermeture, exécution d'une commande d'ouverture-fermeture (S303) ;
et si le signal d'instruction externe est un signal d'instruction de régulation en boucle fermée, exécution d'une commande de régulation en boucle fermée sur la soupape à excitation électromagnétique (S304).

10. Procédé de commande d'une soupape de pulvérisation de stabilisateur de pression selon la revendication 9, dans lequel le signal d'instruction d'ouverture-fermeture comprend un signal d'instruction d'ouverture et un signal d'instruction de fermeture ;
la priorité du signal d'instruction de fermeture est supérieure à celle du signal d'instruction d'ouverture, et la priorité du signal d'instruction d'ouverture est supérieure à celle du signal d'instruction de régulation en boucle fermée.

11. Procédé de commande d'une soupape de pulvérisation de stabilisateur de pression selon la revendication 9, dans lequel le signal d'instruction externe est un signal d'instruction de régulation en boucle fermée, et la mise en œuvre d'une commande de régulation en boucle fermée sur la soupape à excitation électromagnétique comprend :
si le signal d'instruction externe est un signal d'instruction de régulation en boucle fermée, la comparaison, au moyen du module de commande principal (12), du signal de détection de position délivré par le module de formage de signaux (13) au signal d'instruction de régulation en boucle fermée, et la sortie d'une instruction de commande de régulation en boucle fermée en fonction du résultat de comparaison pour la mise en œuvre d'une commande de régulation en boucle fermée sur la soupape à excitation électromagnétique.

12. Procédé de commande d'une soupape de pulvérisation de stabilisateur de pression selon la revendication 11, dans lequel le procédé comprend en outre :
la détection, au moyen d'un module de détection de courant (14), du courant de la soupape à excitation électromagnétique et la sortie d'un signal de détection de courant ;
et l'ajustement, au moyen du module de commande principal (12), de l'instruction de régulation en boucle fermée en fonction du signal de détection de courant de sorte à mettre en œuvre une commande de compensation.
